# FASCICULE DE BREVET EUROPEEN

(11) **EP 1 705 980 B1**
(45) Date de publication et mention de la délivrance du brevet: **03.03.2010**
(21) Numéro de dépôt: 05717429.4
(22) Date de dépôt: 17.01.2005
(51) Int. Cl.: A01B 21/08

(54) **MACHINE DE TRAVAIL DU SOL, DU TYPE DECHAUMEUSE**
SCHEIBEN-SCHÄLPFLUG FÜR BODENBEARBEITUNGSMASCHINE
DISC TILLER SOIL WORKING MACHINE

(30) Priorité: 19.01.2004 FR 0400457
(43) Date de publication de la demande: 04.10.2006
(73) Titulaire: Evin, Michel, 44850 Ligne (FR)
(72) Inventeur: Evin, Michel, 44850 Ligne (FR)
(74) Mandataire: Laget, Jean-Loup
(86) Numéro de dépôt international: PCT/FR2005/000097
(87) Numéro de publication internationale: WO 2005/077138

(56) Documents cités:
- WO-A-2004/004437
- FR-A- 2 636 804
- US-A- 2 041 216
- US-A- 2 797 542
- US-A- 6 158 523

## Description

La présente invention concerne une machine de travail du sol, du type déchaumeuse, comprenant un châssis, porté ou traîné, équipé d'outils aratoires constitués d'au moins un train avant et un train arrière de disques rotatifs non moteurs, chaque disque ou groupe de disques d'un train de disques, étant, en vue d'obtenir un travail de la terre à profondeur constante des disques, couplé, de manière indépendante, par l'intermédiaire d'un dispositif de sécurité, à un support, tel qu'une poutre, commun à l'ensemble des disques du train de disques, chaque dispositif de sécurité autorisant l'effacement, par échappement latéral et/ou vertical, du disque ou groupe de disques correspondant, au-delà d'une pression prédéterminée exercée sur le disque ou groupe de disques.

Les déchaumeuses, qui sont apparues ces dix dernières années dans la version telle que mentionnée ci-dessus, sont aujourd'hui bien connues à ceux versés dans cet art.

Les machines de travail du sol, du type mentionné ci-dessus, comportent deux trains de disques décalés axialement par rapport au sens d'avancement de la machine. Le premier train de disques ou train avant de la machine permet, du fait de la conception des disques, de projeter un premier flux de terre au cours de l'avancement de la machine. Ce premier flux de terre pourra notamment être utilisé pour constituer un lit de semences. Le second train de disques permet la projection d'un second flux de terre qui vient à recouvrement du premier flux de terre. II est ainsi possible, grâce à une telle déchaumeuse, de déposer des graines sur un lit de terre et d'enfouir ces graines ou semences à une profondeur prédéterminée. La présence de ces deux flux de terre permet encore d'obtenir un mélange de la terre et de préparer un sol propre sans retournement de la terre.

Pour permettre un travail de précision d'une telle déchaumeuse, il est nécessaire que chaque disque ou groupe de disques soit monté de manière indépendante et effaçable sur le châssis de la machine. En effet, lorsqu'un disque rencontre un obstacle, si ce disque est monté de manière indépendante sur le châssis, il en résulte un échappement du disque par dégagement vertical et/ou latéral sans générer de soulèvement du reste du châssis de telle sorte que les autres disques du châssis peuvent travailler normalement. Comme de telles machines de travail du sol travaillent à une vitesse d'avancement très élevée, pouvant atteindre 15 à 20 km/h, l'effacement de tels disques devient fondamental pour éviter une casse ou une usure prématurée des disques. Ainsi, grâce à une telle déchaumeuse, il est possible d'obtenir un travail du sol amélioré et à une profondeur constante. Les expérimentations menées ont également permis de démontrer que la disposition des disques sur le châssis, et en particulier la présence d'un angle d'ouverture et généralement d'un angle d'entrure permettent d'optimiser le travail du sol à effectuer. En effet, il s'avère que la possibilité de régler l'angle d'ouverture de chaque disque ou groupe de disques permet de s'adapter à différentes natures de sol. En effet, plus l'angle d'ouverture est important, plus on projette de terre et en conséquence, plus l'effet de mélange de terre obtenu à l'aide des disques est élevé. A l'inverse, lorsque l'angle d'ouverture est réduit, les disques pénètrent mieux dans le sol. En conséquence, il est nécessaire, pour pouvoir exercer un travail de précision, quelle que soit la nature du sol, de disposer d'un angle d'ouverture réglable qui permet d'agir sur la quantité de terre projetée et la profondeur de pénétration de chaque disque ou groupe de disques dans le sol.

Les tentatives qui ont été faites jusqu'à présent pour obtenir un réglage de l'angle d'ouverture ne donnent pas satisfaction. En effet, du fait que chaque disque ou groupe de disques doit être monté de manière indépendante et effaçable sur le châssis support, il est nécessaire de disposer, dans la zone de liaison entre disque et châssis, d'un dispositif de sécurité. La conception classique d'un tel dispositif de sécurité est un bras oscillant chargé par ressort. Un réglage de l'angle d'ouverture de chaque disque nécessite de pouvoir coupler chaque disque à son bras oscillant par une liaison pivot autorisant un pivotement autour d'un axe vertical du disque pour permettre un réglage de l'angle d'ouverture. II en résulte une construction particulièrement complexe de la liaison entre le disque et son support qui, d'une part, nécessite un temps de réglage extrêmement important puisque chaque disque doit être traité indépendamment des autres disques et d'autre part, rend l'ensemble de la construction inadapté sur le plan économique.

Une autre solution est décrite dans la demande internationale WO 2004/004437. Dans ce document, le réglage de l'angle d'ouverture des disques s'opère par rotation du train de disques autour d'un axe horizontal. Cette conception nécessite de disposer en outre d'un dispositif d'ajustement de l'écartement entre disques. II en résulte un ensemble relativement complexe.

On connaît par ailleurs des machines de travail du sol à disques, encore appelées cover crop comme l'illustrent le brevet FR-A-2.636.804, le brevet US-A-2.797.452, le brevet US-A-2.041.216 ou le brevet US-A-6.158.523. Dans le cas de ces machines, la conception du châssis support des disques et le positionnement des disques sur ce châssis sont différents de ceux obtenus dans le cas d'une déchaumeuse de précision. Il n'y a pas d'angle d'ouverture au niveau des disques. En outre, généralement, les disques sont munis d'un évidement central permettant d'enfiler chaque disque sur une poutre support équipant le châssis. A l'état installé sur la poutre support du châssis, ces disques ne comportent pas, dans la position de plus faible encombrement en longueur du châssis qui est généralement un châssis avec des poutres en X, d'angle d'ouverture. De ce fait, lorsqu'un angle d'ouverture voisin de 20° doit être imprimé au disque, chaque poutre support du châssis, qui est montée à pivotement autour d'un axe vertical, est déplacée angulairement d'une valeur voisine de 20° pour obtenir la valeur de l'angle d'ouverture choisie pour chaque disque. II en résulte un encombrement très important en longueur d'un tel châssis. En outre, dans le cas d'une telle machine, l'effacement de chaque disque n'est pas prévu.

Un but de la présente invention est donc de proposer une machine de travail du sol du type déchaumeuse dont la conception permet aux disques, montés de manière indépendante et oscillante sur le châssis support, d'être orientables pour disposer d'un angle d'ouverture réglable sans accroître de manière substantielle l'encombrement en longueur de l'ensemble de la machine et sans compliquer la liaison disque - support.

A cet effet, l'invention a pour objet une machine de travail du sol, du type déchaumeuse de précision, comprenant un châssis, porté ou traîné, équipé d'outils aratoires formés d'au moins un train avant et un train arrière de disques rotatifs non moteurs, chaque disque ou groupe de disques d'un train de disques, étant, en vue d'obtenir un travail de la terre à profondeur constante des disques, couplé, de manière indépendante, par l'intermédiaire d'un dispositif de sécurité, à un support, tel qu'une poutre, commun à l'ensemble des disques du train de disques, chaque dispositif de sécurité autorisant l'effacement, par échappement latéral et/ou vertical, du disque ou groupe de disques correspondant, au-delà d'une pression prédéterminée exercée sur le disque ou groupe de disques, **caractérisée en ce que** chaque disque ou groupe de disques d'un train de disques est, à l'état couplé à son support commun à l'ensemble des disques du train de disques, entraîné à rotation autour d'un axe qui forme avec l'axe longitudinal du support un angle α au moins égal à 2°, de préférence compris dans la plage 3° - 40°, notamment pour conférer par construction à l'ensemble des disques du train de disques une valeur β1 d'angle d'ouverture considérée comme optimale dans une position correspondant à une position de plus faible encombrement en longueur des supports, chaque support commun à l'ensemble des disques d'un train de disques étant monté sur le châssis, à pivotement autour d'un axe vertical de manière à permettre un ajustement de la valeur de l'angle d'ouverture de l'ensemble des disques du train de disques à l'intérieur d'une plage angulaire prédéterminée sans accroître de manière substantielle l'encombrement en longueur de l'ensemble de la machine et sans compliquer la liaison disque - support.

Grâce au fait que les disques du train de disques sont montés sur leur support avec un premier angle d'ouverture prédéterminé fixe voisin d'une valeur optimale en position de plus faible encombrement en longueur du support, le déplacement du support, par entraînement à pivotement autour d'un axe vertical, peut s'effectuer à l'intérieur d'une plage angulaire réduite car ce déplacement est nécessaire uniquement pour permettre d'optimiser et d'ajuster de manière plus fine la valeur de l'angle d'ouverture en fonction de la nature du sol ou du type de travail à réaliser. Comme il s'agit uniquement d'un ajustement de la valeur de l'angle d'ouverture de chaque disque autour de sa valeur optimale prédéterminée par construction, le déplacement angulaire du support ne s'effectue que sur quelques degrés et l'accroissement de l'encombrement en longueur du support qui en résulte est extrêmement faible. Par ailleurs, le fait d'agir sur le déplacement du support commun au disque d'un train de disques et non sur la liaison entre disque et support pour permettre le réglage de l'angle d'ouverture permet d'une part de ne pas avoir à compliquer cette liaison entre disque et support, d'autre part d'effectuer un tel réglage en un temps court.

L'invention sera bien comprise à la lecture de la description suivante d'exemples de réalisation, en référence aux dessins annexés dans lesquels :
la figure 1 représente une vue de dessus d'une machine de travail du sol conforme à l'invention dans la position de plus faible encombrement des supports de disques du châssis ;
la figure 2 représente une vue de dessus d'une machine de travail du sol conforme à l'invention dans une position dans laquelle l'angle d'ouverture des disques est différent de celui représenté à la figure 1 et
la figure 3 représente une vue de dessus d'une machine de travail du sol conforme à l'invention dans laquelle le mode de réalisation du châssis et des supports de disques a été modifié.

Comme mentionné ci-dessus, la machine de travail du sol, du type déchaumeuse de précision, objet de l'invention, comprend un châssis 1, porté ou traîné, équipé d'outils aratoires. Le châssis 1 peut affecter un grand nombre de formes. Dans les exemples représentés, ce châssis 1 est constitué d'au moins un cadre formé de deux longerons 1A reliés entre eux par des traverses 1B s'étendant sensiblement perpendiculairement à la ligne d'avancement XX' de la machine. Le châssis 1 est en outre équipé d'un dispositif d'attelage à un véhicule tracteur non représenté. L'attelage sera de préférence de type trois points. Les outils aratoires sont quant à eux constitués d'au moins un train 2 avant et d'un train 3 arrière de disques 4 rotatifs non moteurs. Ces trains avant et arrière de disques s'étendent chacun le long d'une largeur de travail, c'est-à-dire le long d'une ligne perpendiculaire à la ligne XX' d'avancement ou de traction du châssis 1. Il est à noter que, par disque déchaumeur non moteur, on entend des disques déchaumeurs dont l'entraînement en rotation est provoqué sous l'effet de la force de friction avec le sol, force générée par le déplacement du châssis.

Dans les exemples représentés, ces disques 4 travaillent dans le sol suivant un terrage réglable par l'intermédiaire d'au moins un organe 9 de référence, de préférence rotatif, tel qu'une roue, un rouleau, couplé au châssis 1 de la machine. Cet organe 9 de référence, commun à l'ensemble des disques 4 de la machine, est positionné, de préférence en arrière du dernier train de disques 4, pris dans le sens d'avancement de la machine.

Dans les exemples représentés, l'organe 9 de réglage du terrage est constitué par un rouleau commun à l'ensemble des disques déchaumeurs du train arrière de la déchaumeuse. Ce rouleau est couplé au châssis 1 par l'intermédiaire de deux bras s'étendant à l'arrière du cadre formant châssis, lesdits bras étant réglables en position sur le châssis 1. Ce réglage de terrage s'effectue par coopération de cet organe de référence avec le dispositif d'attelage.

Les outils aratoires, constitués par les disques 4 déchaumeurs rotatifs non moteurs, sont réalisés de manière telle que chaque disque ou groupe de disques d'un train 2, 3 de disques est monté indépendant et oscillant par rapport au châssis 1 porteur de la déchaumeuse de manière à s'escamoter sous une pression prédéterminée réglable et obtenir ainsi un travail de la terre à profondeur constante des disques 4 déchaumeurs. Chaque disque 4 est ainsi relié au châssis 1 par un dispositif 5 de sécurité autorisant l'effacement par échappement latéral et/ou vertical du disque 4 ou groupe de disques 4 correspondant lorsque la pression exercée sur le disque ou groupe de disques est supérieure à une valeur prédéterminée. Dans les exemples représentés, chaque disque 4 ou groupe de disques 4 d'un train de disques est ainsi relié au support commun à l'ensemble des disques d'un train de disques par un dispositif 5 de sécurité constitué d'au moins un ressort hélicoïdal formant au moins une spire, de préférence au moins une spire et demie, de manière à créer, au niveau du ressort, une zone de chevauchement ou de recouvrement lors d'un resserrement des spires. Une extrémité du ressort est couplable directement ou par l'intermédiaire d'une pièce de liaison au châssis tandis que l'autre extrémité du ressort est couplable, côté concave du disque, au moyeu du disque. Ce ressort est orienté de manière telle que la ou les spires du ressort se resserrent par enroulement lorsque la pression exercée sur le disque est supérieure à la pression prédéterminée en autorisant un effacement vertical du disque par soulèvement ou un échappement latéral du disque.

Bien évidemment, d'autres modes de réalisation d'un tel dispositif de sécurité auraient pu être envisagés tels qu'un bras pivotant chargé par ressort.

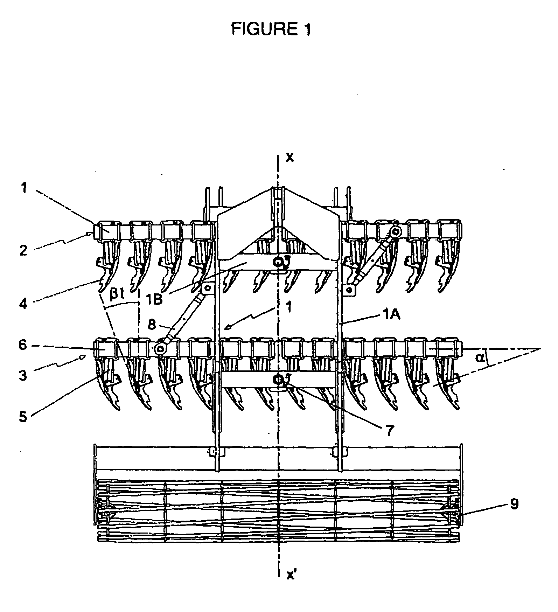

De manière caractéristique à l'invention, chaque disque 4 ou groupe de disques 4 d'un train de disques est, à l'état couplé à son support 6, commun à l'ensemble des disques du train 2, 3 de disques 4, entraîné à rotation autour d'un axe qui forme avec l'axe longitudinal du support 6 un angle α compris dans la plage [3° - 40°], de préférence compris dans la plage [6° - 35°], de préférence encore voisin de 20°. Cette disposition particulière du disque par rapport à la poutre support 6 permet ainsi de conférer à l'ensemble des disques du train de disques une valeur β1 d'angle d'ouverture jugée optimale par le constructeur dans une position correspondant à une position de plus faible encombrement en longueur des supports 6. Cette valeur β1 prend les mêmes valeurs que a. Cette position de plus faible encombrement en longueur, qui est notamment représentée à la figure 1, correspond à une position dans laquelle les supports sont réalisés chacun sous forme d'une poutre, lesdites poutres s'étendant parallèlement l'une par rapport à l'autre et perpendiculairement à l'axe XX' d'avancement du châssis.

Lorsque la nature du sol nécessite un réglage différent de l'angle d'ouverture de chaque disque par rapport à la valeur fixe prédéterminée correspondant à l'angle β1 dans la position de plus faible encombrement du châssis, l'opérateur peut ajuster cette valeur de l'angle d'ouverture. A cet effet, chaque support 6 commun à l'ensemble des disques 4 d'un train 2, 3 de disques 4 est monté sur le châssis 1, à pivotement autour d'un l'axe vertical de manière à permettre, par entraînement à pivotement dudit support 6 autour de son axe vertical, un ajustement de la valeur de l'angle d'ouverture de l'ensemble des disques 4 du train 2, 3 de disques 4 autour de la valeur β1 prédéterminée. Cet ajustement s'effectue donc à l'intérieur d'une plage angulaire prédéterminée sans accroître de manière substantielle l'encombrement en longueur de l'ensemble de la machine et sans compliquer la liaison disque 4 - support 6. En effet, comme la valeur β1 de l'angle d'ouverture dans la position de plus faible encombrement du châssis correspond à une valeur optimale ou proche de la valeur optimale, le déplacement angulaire des supports 6 nécessaire à optimiser cette valeur lorsque la nature du sol change correspond à une rotation de quelques degrés de la poutre support 6 autour de la liaison 7 pivot de la poutre support 6 au châssis 1 (voir double flèche à la figure 1). De ce fait, l'augmentation de l'encombrement en longueur de la machine qui résulte de cet entraînement à pivotement est extrêmement faible. Si le disque ne possédait pas au départ un angle d'ouverture β1 proche de la valeur considérée comme optimale par le constructeur, il serait nécessaire d'entraîner en pivotement le support de disques commun aux disques d'un train de disques à l'intérieur d'une large plage pour permettre l'obtention d'une valeur optimale de l'angle d'ouverture.

Grâce au pré-montage du disque sur son support, chaque support 6, commun à l'ensemble des disques 4 d'un train 2, 3 de disques 4 est ainsi déplaçable angulairement à l'intérieur d'une plage angulaire au moins égale à 2°, de préférence comprise entre 6° et 25°. Il suffit ainsi par exemple de pouvoir entraîner angulairement, autour de la liaison pivot 7, le support 6 commun aux disques d'un train de disques d'une valeur de 10° dans un sens ou dans l'autre par rapport à la position de moindre encombrement en longueur, ce qui correspond à une plage angulaire de 20° pour pouvoir couvrir l'ensemble des valeurs optimales de l'angle d'ouverture quelle que soit la nature du sol et le type de travail à réaliser. Il en résulte, dans chaque position extrême prise par les supports du châssis, un faible accroissement de l'encombrement en longueur du châssis de la machine.

Dans les exemples représentés, chaque support 6, commun à l'ensemble des disques 4 d'un train 2, 3 de disques 4 et couplé au châssis 1 par une liaison 7 pivot à axe vertical, est entraîné à pivotement autour dudit axe vertical par l'intermédiaire d'un organe 8 de commande, tel qu'un vérin, de préférence commandé en fonctionnement à partir d'un véhicule tracteur de la machine.

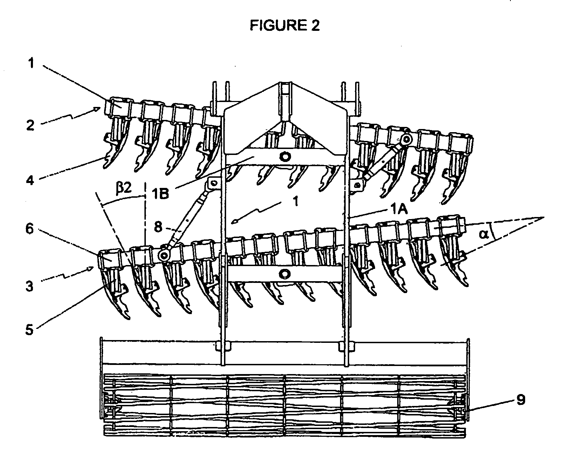

Plusieurs modes de réalisation de la machine peuvent être envisagés. Ainsi, dans les exemples représentés aux figures 1 et 2, la machine de travail du sol comporte deux supports 6 de type poutre s'étendant sensiblement parallèlement l'un par rapport à l'autre et orthogonalement à l'axe XX' d'avancement du châssis dans une position dite de moindre encombrement en longueur. Ces deux supports 6 de type poutre sont positionnés respectivement l'un à l'avant du châssis 1, l'autre à l'arrière du châssis 1, et s'étendent chacun sur une largeur de travail de la machine. Chaque poutre 6 est couplée par une liaison pivot 7 à une traverse 1B du châssis 1, cette traverse 1B s'étendant elle-même entre deux longerons 1A du châssis 1. Chaque support 6 est entraîné à pivotement autour de la liaison 7 pivot par l'intermédiaire d'un vérin 8 s'étendant entre poutre et longeron 1A du châssis. Cet entraînement à pivotement est commandé de manière telle que les poutres supports 6 forment ainsi un V entre elles en dehors de leur position de plus faible encombrement en longueur. La liaison pivot 7 est de préférence disposée à chaque fois dans la zone sensiblement médiane du support 6 commun aux disques d'un train de disques. Ainsi, dans la position de plus faible encombrement en longueur des supports 6, telle que représentée à la figure 1, les poutres supports 6 s'étendent parallèlement l'une par rapport à l'autre, chaque disque présentant dans cette position des poutres supports 6 un angle d'ouverture β1 compris dans la plage [3° - 40°], de préférence compris dans la plage [6° - 35°], de préférence voisin de 20°.

A la figure 2, l'angle d'ouverture a été ajusté à une valeur β2 voisine de 24°, supérieure à la valeur β1 voisine de 20° de l'angle d'ouverture choisi par le constructeur. A cet effet, chaque support a été entraîné en rotation. Ainsi, lors du réglage de l'angle d'ouverture, qui correspond à l'angle formé par le plan de rotation du disque avec un plan vertical parallèle à l'axe XX' d'avancement, les supports 6 sont entraînés en pivotement suivant deux directions opposées. Le support avant est donc entraîné dans la figure 2 à pivotement vers la droite tandis que le support arrière est entraîné à pivotement vers la gauche de telle sorte que les supports forment un V entre eux.

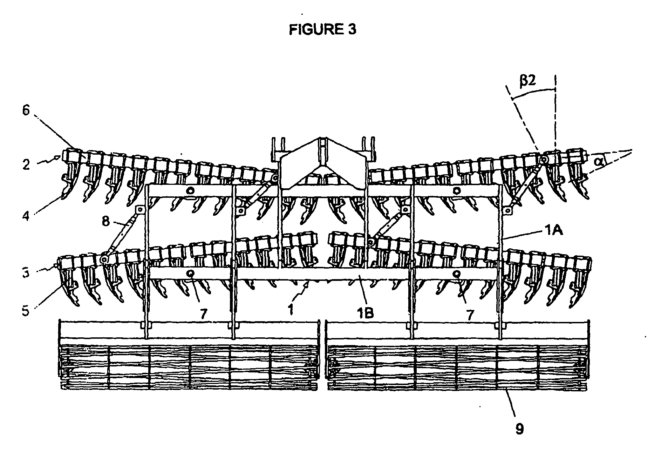

Dans l'exemple représenté à la figure 3, la machine de travail du sol comporte quatre supports 6 de type poutre formés de deux supports positionnés à l'avant de la machine et de deux supports positionnés à l'arrière de la machine. Chaque support est commun à un ensemble de disques ou groupe de disques d'un train de disques. Ces supports 6 couvrent ainsi par paire une largeur de travail de la machine. Chaque support 6 est couplé au châssis 1 par une liaison 7 pivot à axe vertical s'étendant sensiblement dans la partie médiane dudit support 6. Les supports 6 ainsi disposés forment en vue de dessus un X ou un losange en dehors de leur position de moindre encombrement en longueur dans laquelle les deux supports positionnés à l'avant du châssis sont disposés alignés et s'étendent orthogonalement à l'axe XX' d'avancement du châssis, de même que les deux supports positionnés à l'arrière du châssis, les supports étant en outre parallèles les uns par rapport aux autres.

Dans les modes de réalisation représentés, les disques sont des disques concaves de grand diamètre, de préférence crénelés, et présentent une concavité inversée d'un train de disques à un autre d'une part entre trains de disques positionnés sensiblement sur une même largeur de travail de la machine, d'autre part entre trains de disques décalés axialement par rapport à l'axe longitudinal de la machine. Ainsi, les disques des deux trains avant de disques présentent une concavité inversée d'un train de disques à un autre. Chaque train avant de disques présente en outre des disques à concavité inversée par rapport aux disques du train arrière de disques qu'il précède. Ainsi, l'une des branches du X, comme l'illustre la figure 3, est constituée de deux supports 6 avec des disques présentant une même orientation de la concavité tandis que l'autre branche du X est constituée de deux supports dont les disques présentent également une même concavité inversée par rapport aux disques de la première branche du X.

Dans l'exemple représenté aux figures 1 et 2, où le châssis est équipé uniquement de deux supports réalisés sous forme de poutre, chaque support étant commun aux disques d'un train de disques, à nouveau chaque disque 4 d'un train 2, 3 de disques est un disque concave de grand diamètre, de préférence au moins égal à 40 cm. Les disques présentent alors une concavité inversée d'un train 2 de disques à un autre train 3 de disques lorsque les trains 2 de disques sont décalés axialement par rapport à l'axe longitudinal de la machine. Ainsi, le train avant de disques présente des disques avec une concavité inversée par rapport aux disques équipant le train arrière de disques.

Pour parfaire le fonctionnement de l'ensemble, chaque disque 4 ou groupe de disques 4 présente en outre un angle d'entrure ou de carrossage compris dans la plage [3 - 20]°. Cet angle d'entrure est fixé par construction au moment de l'assemblage du disque sur son support 6 commun à l'ensemble des disques du train de disques. Le rôle de cet angle d'entrure ne sera pas décrit plus en détail ci-après.

Comme l'illustrent les figures et en particulier le passage de la figure 1 à la figure 2, il devient ainsi extrêmement aisé de régler la valeur de l'angle d'ouverture. Il suffit pour ce faire d'entraîner en pivotement chaque support 6 commun aux disques d'un train de disques de quelques degrés en fonction de la valeur d'angle optimale choisie par l'opérateur à partir de la nature du sol ou de la profondeur de travail souhaitée ou du taux de pénétration dans le sol souhaité.

## Revendications

1. Machine de travail du sol, du type déchaumeuse de précision, comprenant un châssis (1), porté ou traîné, équipé d'outils aratoires formés d'au moins un train (2) avant et un train (3) arrière de disques (4) rotatifs non moteurs, chaque disque (4) ou groupe de disques d'un train (2, 3) de disques, étant, en vue d'obtenir un travail de la terre à profondeur constante des disques (4), couplé, de manière indépendante, par l'intermédiaire d'un dispositif (5) de sécurité, à un support (6), tel qu'une poutre, commun à l'ensemble des disques (4) du train (2, 3) de disques (4), chaque dispositif (5) de sécurité autorisant l'effacement, par échappement latéral et/ou vertical, du disque (4) ou groupe de disques (4) correspondant, au-delà d'une pression prédéterminée exercée sur le disque ou groupe de disques,
**caractérisée en ce que** chaque disque (4) ou groupe de disques (4) d'un train de disques est, à l'état couplé à son support (6), commun à l'ensemble des disques du train (2, 3) de disques (4), entraîné à rotation autour d'un axe qui forme avec l'axe longitudinal du support un angle α au moins égal à 2°, de préférence compris dans la plage 3° - 40°, notamment pour conférer par construction à l'ensemble des disques du train (2, 3) de disques (4) une valeur β1 d'angle d'ouverture considérée comme optimale dans une position correspondant à une position de plus faible encombrement en longueur des supports (6), chaque support (6), commun à l'ensemble des disques (4) d'un train (2, 3) de disques (4), étant monté sur le châssis (1), à pivotement autour d'un axe vertical de manière à permettre un ajustement de la valeur de l'angle d'ouverture de l'ensemble des disques (4) du train (2, 3) de disques (4) à l'intérieur d'une plage angulaire prédéterminée sans accroître de manière substantielle l'encombrement en longueur de l'ensemble de la machine et sans compliquer la liaison disque (4) - support (6).

2. Machine de travail du sol selon la revendication 1,
**caractérisée en ce que** chaque support (6), commun à l'ensemble des disques d'un train (2, 3) de disques (4), est déplaçable angulairement à l'intérieur d'une plage angulaire au moins égale à 2°, de préférence comprise entre 6 et 25°.

3. Machine de travail du sol selon l'une des revendications 1 et 2,
**caractérisée en ce que** l'angle α, formé par l'axe de rotation de chaque disque (4) d'un train (2, 3) de disques (4) avec l'axe longitudinal du support (6) du train (2, 3) de disques (4), et compris dans la plage [3° - 40°], est choisi voisin de 20°.

4. Machine de travail du sol selon l'une des revendications 1 à 3,
**caractérisée en ce que** chaque support (6), commun à l'ensemble des disques (4) d'un train (2, 3) de disques (4), et couplé au châssis (1) par une liaison (7) pivot à axe vertical, est entraîné à pivotement autour dudit axe vertical par l'intermédiaire d'un organe (8) de commande, tel qu'un vérin, de préférence commandé en fonctionnement à partir d'un véhicule tracteur de la machine.

5. Machine de travail du sol selon l'une des revendications 1 à 4,
**caractérisée en ce qu'**elle comporte deux supports (6) de type poutre, positionnés respectivement l'un à l'avant du châssis (1), l'autre à l'arrière du châssis (1), et s'étendant chacun sur une largeur de travail de la machine, chaque poutre (6) étant couplée par une liaison pivot (7) à une traverse (1 B) du châssis (1), cette traverse (1 B) s'étendant elle-même entre deux longerons (1A) du châssis (1).

6. Machine de travail du sol selon l'une des revendications 1 à 4,
**caractérisée en ce qu'**elle comporte quatre supports (6) de type poutre formés de deux supports positionnés à l'avant de la machine et de deux supports positionnés à l'arrière de la machine, ces supports (6) couvrant par paire une largeur de travail de la machine, chaque support étant couplé au châssis (1) par une liaison (7) pivot à axe vertical s'étendant sensiblement dans la partie médiane dudit support (6).

7. Machine de travail du sol selon l'une des revendications 1 à 6,
**caractérisée en ce que** chaque disque (4) d'un train (2, 3) de disques est un disque concave de grand diamètre, les disques présentant une concavité inversée d'un train (2) de disques à un autre train (3) de disques d'une part entre trains de disques positionnés sensiblement sur une même largeur de travail de la machine, d'autre part entre trains de disques décalés axialement par rapport à l'axe longitudinal de la machine.

8. Machine de travail du sol selon l'une des revendications 1 à 7,
**caractérisée en ce que** chaque disque (4) ou groupe de disques (4) présente en outre un angle d'entrure compris dans la plage [3 - 20]°.

9. Machine de travail du sol selon l'une des revendications 1 à 8,
**caractérisée en ce que** le châssis (1) est muni d'un organe (9) de référence, de préférence rotatif, tel qu'une roue, un rouleau, commun à l'ensemble des disques de la machine, cet organe (9) de référence étant positionné de préférence en arrière du dernier train de disques (4) pris dans le sens d'avancement de la machine, cet organe de référence assurant un réglage du terrage des disques (4) travaillant dans le sol.

10. Machine de travail du sol selon l'une des revendications 1 à 9,
**caractérisée en ce que** chaque disque (4) ou groupe de disques (4) d'un train (2, 3) de disques (4) est relié au support (6) commun à l'ensemble des disques du train (2, 3) de disques (4) par un dispositif (5) de sécurité constitué d'au moins un ressort hélicoïdal formant au moins une spire, de préférence au moins une spire et demie, de manière à créer, au niveau du ressort, une zone de chevauchement ou de recouvrement, une extrémité du ressort étant couplable directement ou par l'intermédiaire d'une pièce de liaison au châssis tandis que l'autre extrémité du ressort est couplable au moyeu du disque, ce ressort étant orienté de manière telle que la ou les spires du ressort se resserrent par enroulement lorsque la pression exercée sur le disque est supérieure à la pression prédéterminée en autorisant un effacement vertical du disque par soulèvement ou un échappement latéral du disque.

## Claims

1. Soil-working machine of the precision disc tiller type, comprising a carried or towed chassis (1), equipped with ploughing tools made up of at least one front train (2) and one rear train (3) of non-driving rotary discs (4), each disc (4) or group of discs in a train (2, 3) of discs being independently coupled via a safety device (5), with a view to obtaining working of the ground with the discs (4) at a constant depth, to a support (6), such as a beam, which is common to all the discs (4) in the train (2, 3) of discs (4), each safety device (5) allowing the withdrawal, by lateral and/or vertical evasion, of the corresponding disc (4) or group of discs (4), beyond a predetermined pressure which is exerted on the disc or group of discs,
**characterised in that** each disc (4) or group of discs (4) in a train of discs is, in the state in which it is coupled to its support (6) which is common to all the discs in the train (2, 3) of discs (4), driven in rotation about an axis which forms, with the longitudinal axis of the support, an angle α which is at least equal to 2° and preferably contained within the range 3° - 40°, especially in order to confer upon all the discs in the train (2, 3) of discs (4), by virtue of design, a value β1 for the angle of opening which is regarded as optimum in a position corresponding to a most compact position of the supports (6) in terms of length, each support (6), which is common to all the discs (4) in a train (2, 3) of discs (4), being mounted on the chassis (1) for pivoting movement about a vertical axis in such a way as to permit adjustment of the value of the angle of opening of all the discs (4) in the train (2, 3) of discs (4) within a predetermined angular range without substantially increasing the space occupied by the machine as a whole in terms of length and without complicating the disc (4)/support (6) link.

2. Soil-working machine according to claim 1,
**characterised in that** each support (6), which is common to all the discs in a train (2, 3) of discs (4), is displaceable angularly within an angular range which is at least equal to 2° and preferably between 6 and 25°.

3. Soil-working machine according to either of claims 1 or 2,
**characterised in that** the angle α, which is formed by the axis of rotation of each disc (4) in a train (2, 3) of discs (4) with the longitudinal axis of the support (6) of the train (2, 3) of discs (4) and is contained with the range [3° - 40°], is chosen so as to be close to 20°.

4. Soil-working machine according to one of claims 1 to 3,
**characterised in that** each support (6), which is common to all the discs (4) in a train (2, 3) of discs (4) and is coupled to the chassis (1) by a pivot link (7) with a vertical axis, is driven for pivoting movement about the said vertical axis via a control component (8), such as a jack, which is preferably controlled, in terms of functioning, from a vehicle towing the machine.

5. Soil-working machine according to one of claims 1 to 4,
**characterised in that** it comprises two supports (6) of the beam type, which are respectively positioned one at the front of the chassis (1) and the other at the rear of the chassis (1), and which each extend over a working width of the machine, each beam (6) being coupled by a pivot link (7) to a cross-member (1B) of the chassis (1), the said cross-member (1B) itself extending between two longitudinal members (1A) of the chassis (1).

6. Soil-working machine according to one of claims 1 to 4,
**characterised in that** it comprises four supports (6) of the beam type which are made up of two supports positioned at the front of the machine and two supports positioned at the rear of the machine, the said supports (6) covering, per pair, a working width of the machine, each support being coupled to the chassis (1) by a pivot link (7) with a vertical axis extending substantially in the median part of the said support (6).

7. Soil-working machine according to one of claims 1 to 6,
**characterised in that** each disc (4) in a train (2, 3) of discs is a large-diameter concave disc, the discs having a concavity which is reversed from one train (2) of discs to another train (3) of discs, on the one hand, between trains of discs which are positioned substantially over the same working width of the machine and, on the other hand, between trains of discs which are offset axially in relation to the longitudinal axis of the machine.

8. Soil-working machine according to one of claims 1 to 7,
**characterised in that** each disc (4) or group of discs (4) also has an angle of entry which is contained within the range [3 - 20]°.

9. Soil-working machine according to one of claims 1 to 8,
**characterised in that** the chassis (1) is equipped with a, preferably rotary, reference component (9), such as a wheel or a roller, which is common to all the discs on the machine, the said reference component (9) being positioned preferably behind the last train of discs (4), referred to the direction of advance of the machine, the said reference component regulating the topsoiling by the discs (4) working in the soil.

10. Soil-working machine according to one of claims 1 to 9,
**characterised in that** each disc (4) or group of discs (4) in a train (2, 3) of discs (4) is connected to the support (6) common to all the discs in the train (2, 3) of discs (4) by a safety device (5) made up of at least one helical spring forming at least one turn, and preferably at least one and a half turns, in such a way as to create an area of overriding or overlapping at the spring, one end of said spring being capable of being coupled to the chassis, either directly or via a linking piece, while the other end of the spring is capable of being coupled to the hub of the disc, the said spring being oriented in such a way that the turn or turns of the spring tighten as a result of winding-up when the pressure exerted on the disc is greater than the predetermined pressure, allowing vertical withdrawal on the part of the disc as a result of rising or lateral evasion on the part of the disc.

## Patentansprüche

1. Bodenbearbeitungsgerät der Bauart Präzisionsschälpflug mit einem Fahrgestell (1), Aufsattel- oder Anhängefahrgestell, das mit Ackerwerkzeugen ausgerüstet ist, die von mindestens einer Vorderachse (2) und einer Hinterachse (3) mit nicht angetriebenen drehbaren Scheiben (4) gebildet werden, wobei jede Scheibe (4) oder Gruppe von Scheiben einer Achse (2, 3) mit Scheiben, um eine konstant tiefe Bodenbearbeitung der Scheiben (4) zu erreichen, unabhängig über eine Sicherheitsvorrichtung (5) an einen Halter (6), wie einem Träger, gekoppelt ist, der der Gesamtheit der Scheiben (4) der Achse (2, 3) mit Scheiben (4) gemeinsam ist, wobei jede Sicherheitsvorrichtung (5) das Lösen der entsprechenden Scheibe (4) oder Gruppe von Scheiben (4) durch seitliches und/oder vertikales Ausfahren über einem vorbestimmten Druck, der auf die Scheibe oder Gruppe von Scheiben ausgeübt wird, ermöglicht, **dadurch gekennzeichnet, dass** jede Scheibe (4) oder Gruppe von Scheiben (4) einer Achse mit Scheiben in dem Zustand, in dem sie an ihrem Halter (6) gekoppelt ist, der der Gesamtheit der Scheiben der Achse (2, 3) mit Scheiben (4) gemeinsam ist, um eine Achse, die mit der Längsachse des Halters einen Winkel α von mindestens 2 °, vorzugsweise im Bereich von 3 ° bis 40 °, bildet, drehangetrieben ist, insbesondere, um der Gesamtheit der Scheiben der Achse (2, 3) mit Scheiben (4) baulich einen Wert β1 des Öffnungswinkels zu verleihen, der in einer Stellung, die einer Stellung mit der kleinsten Längsabmessung der Halter (6) entspricht, als optimal betrachtet wird, wobei jeder Halter (6), der der Gesamtheit der Scheiben (4) einer Achse (2, 3) mit Scheiben (4) gemeinsam ist, um eine vertikale Achse schwenkbar an dem Fahrgestell (1) befestigt ist, um eine Verstellung des Wertes des Öffnungswinkels der Gesamtheit der Scheiben (4) der Achse (2, 3) mit Scheiben (4) innerhalb eines vorbestimmten Winkelbereiches zu ermöglichen, ohne die Längsabmessung der Gesamtheit des Gerätes wesentlich zu erhöhen und ohne die Verbindung von Scheibe (4) und Halter (6) zu erschweren.

2. Bodenbearbeitungsgerät nach Anspruch 1, **dadurch gekennzeichnet, dass** jeder Halter (6), der der Gesamtheit der Scheiben einer Achse (2, 3) mit Scheiben (4) gemeinsam ist, innerhalb eines Winkelbereiches von mindestens 2 °, vorzugsweise zwischen 6 und 25 °, winklig bewegbar ist.

3. Bodenbearbeitungsgerät nach einem der Ansprüche 1 und 2, **dadurch gekennzeichnet, dass** der Winkel α, der von der Drehachse jeder Scheibe (4) einer Achse (2, 3) mit Scheiben (4) mit der Längsachse des Halters (6) der Achse (2, 3) mit Scheiben (4) gebildet wird und im Bereich von [3 ° bis 40 °] liegt, um 20 ° gewählt wird.

4. Bodenbearbeitungsgerät nach einem der Ansprüche 1 bis 3, **dadurch gekennzeichnet, dass** jeder Halter (6), der der Gesamtheit der Scheiben (4) einer Achse (2, 3) mit Scheiben (4) gemeinsam ist und über eine Drehgelenkverbindung (7) mit vertikaler Achse an das Fahrgestell (1) gekoppelt ist, über ein Steuerelement (8), wie ein Zylinder, das vorzugsweise von einer Zugmaschine des Gerätes aus betätigt wird, um die vertikale Achse schwenkbar angetrieben ist.

5. Bodenbearbeitungsgerät nach einem der Ansprüche 1 bis 4, **dadurch gekennzeichnet, dass** es zwei Halter (6) der Bauart Träger umfasst, von denen einer vorn an dem Fahrgestell (1), der andere hinten an dem Fahrgestell (1) angeordnet ist und die sich jeweils über eine Arbeitsbreite des Gerätes erstrecken, wobei jeder Träger (6) über eine Drehgelenkverbindung (7) an eine Querstrebe (1B) des Fahrgestells (1) gekoppelt ist, wobei sich die Querstrebe (1B) selbst zwischen zwei Längsträgern (1A) des Fahrgestells (1) erstreckt.

6. Bodenbearbeitungsgerät nach einem der Ansprüche 1 bis 4, **dadurch gekennzeichnet, dass** es vier Halter (6) der Bauart Träger umfasst, die von zwei vorn an dem Gerät und von zwei hinten an dem Gerät angeordneten Haltern gebildet werden, wobei die Halter (6) paarweise eine Arbeitsbreite des Gerätes überdecken, wobei jeder Halter über eine Drehgelenkverbindung (7) mit vertikaler Achse, die sich im Wesentlichen in dem mittleren Abschnitt des Halters (6) erstreckt, an das Fahrgestell (1) gekoppelt ist.

7. Bodenbearbeitungsgerät nach einem der Ansprüche 1 bis 6, **dadurch gekennzeichnet, dass** jede Scheibe (4) einer Achse (2, 3) mit Scheiben eine nach innen gewölbte Scheibe mit einem großen Durchmesser ist, wobei die Scheiben einer Achse (2) mit Scheiben gegenüber den Scheiben einer anderen Achse (3) mit Scheiben, einerseits zwischen Achsen mit Scheiben, die im Wesentlichen über eine gleiche Arbeitsbreite des Gerätes angeordnet sind, andererseits zwischen Achsen mit Scheiben, die zur Längsachse des Gerätes axial versetzt sind, eine umgekehrte Innenwölbung aufweisen.

8. Bodenbearbeitungsgerät nach einem der Ansprüche 1 bis 7, **dadurch gekennzeichnet, dass** jede Scheibe (4) oder Gruppe von Scheiben (4) zudem einen Schnittwinkel im Bereich von [3 bis 20] ° aufweist.

9. Bodenbearbeitungsgerät nach einem der Ansprüche 1 bis 8, **dadurch gekennzeichnet, dass** das Fahrgestell (1) mit einem vorzugsweise drehbaren Bezugselement (9) wie ein Rad, eine Walze ausgerüstet ist, das der Gesamtheit der Scheiben des Gerätes gemeinsam ist, wobei das Bezugselement (9) vorzugsweise hinten an der letzten Achse mit Scheiben (4) in Fahrtrichtung des Gerätes gesehen angeordnet ist, wobei das Bezugselement eine Einstellung der Arbeitstiefe der den Boden bearbeitenden Scheiben (4) sicherstellt.

10. Bodenbearbeitungsgerät nach einem der Ansprüche 1 bis 9, **dadurch gekennzeichnet, dass** jede Scheibe (4) oder Gruppe von Scheiben (4) einer Achse (2, 3) mit Scheiben (4) mit dem Halter (6), der der Gesamtheit der Scheiben der Achse (2, 3) mit Scheiben (4) gemeinsam ist, über eine Sicherheitsvorrichtung (5) verbunden ist, die mindestens eine Schraubenfeder umfasst, die mindestens eine Windung, vorzugsweise mindestens anderthalb Windungen bildet, so dass an der Feder ein Überlappungs- oder Überdeckungsbereich geschaffen wird, wobei ein Ende der Feder direkt oder über ein Verbindungsstück an das Fahrgestell koppelbar ist, während das andere Ende der Feder an die Nabe der Scheibe koppelbar ist, wobei die Feder derart ausgerichtet ist, dass sich die Windung oder die Windungen der Feder zusammenstauchen, wenn der auf die Scheibe ausgeübt Druck den vorbestimmten Druck übersteigt, und dabei ein vertikales Lösen der Scheibe durch Anheben oder ein seitliches Ausfahren der Scheibe ermöglichen.
